(19) Europäisches Patentamt
European Patent Office
Office européen des brevets

(11) **EP 3 170 648 B1**

(12) **EUROPÄISCHE PATENTSCHRIFT**

(45) Veröffentlichungstag und Bekanntmachung des Hinweises auf die Patenterteilung:
**19.05.2021 Patentblatt 2021/20**

(51) Int Cl.:
**B29C 67/00** (2017.01)  **B33Y 50/02** (2015.01)
**B22F 3/105** (2006.01)

(21) Anmeldenummer: **15194888.2**

(22) Anmeldetag: **17.11.2015**

(54) **ADDITIVES HERSTELLUNGSVERFAHREN UND VERFAHREN ZUR ANSTEUERUNG EINER VORRICHTUNG ZUR ADDITIVEN HERSTELLUNG EINES DREIDIMENSIONALEN BAUTEILS**

ADDITIVE PRODUCTION METHOD AND METHOD FOR CONTROLLING A DEVICE FOR ADDITIVE PRODUCTION OF A THREE-DIMENSIONAL COMPONENT

PROCÉDÉ DE FABRICATION ADDITIVE ET PROCÉDÉ DE COMMANDE D'UN DISPOSITIF DE FABRICATION ADDITIVE D'UN COMPOSANT TRIDIMENSIONNEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.05.2017 Patentblatt 2017/21**

(73) Patentinhaber: **Additive Works GmbH**
**28359 Bremen (DE)**

(72) Erfinder:
• **Keller, Nils**
  **28357 Bremen (DE)**
• **Xu, Hongxiao**
  **28199 Bremen (DE)**
• **Schlasche, John Wilfried**
  **28199 Bremen (DE)**
• **Ploshikhin, Vasily**
  **95448 Bayreuth (DE)**

(74) Vertreter: **Manasse, Uwe**
**Boehmert & Boehmert**
**Anwaltspartnerschaft mbB**
**Patentanwälte Rechtsanwälte**
**Hollerallee 32**
**28209 Bremen (DE)**

(56) Entgegenhaltungen:
**GB-A- 2 378 150     US-A1- 2015 088 292**

• **LI C ET AL: "A multiscale modeling approach for fast prediction of part distortion in selective laser melting", JOURNAL OF MATERIALS PROCESSING TECHNOLOGY, Bd. 229, 12. Juni 2015 (2015-06-12), Seiten 703-712, XP029332947, ISSN: 0924-0136, DOI: 10.1016/J.JMATPROTEC.2015.10.022**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 170 648 B1

## Beschreibung

Die vorliegende Erfindung betrifft ein additives Herstellungsverfahren zum Herstellen eines dreidimensionalen Bauteils aus mehreren Bauteilschichten durch mehrfaches inkrementelles, insbesondere schichtweises, Hinzufügen von pulver-, draht- oder bandförmigem Bauteilausgangsmaterial und, vorzugsweise inkrementelles, formgebendes Verfestigen durch jeweiliges selektives Schmelzen und/oder Sintern des Bauteilausgangsmaterials mittels einer gemäß einer Scanstrategie durch eine Energiequelle eingebrachten Wärmemenge, wobei die Scanstrategie ein Scanmuster umfasst, das ein Hatching umfasst. Als Energiequelle(n) könnte(n) zum Beispiel ein Lichtbogen, ein Plasma bzw. Plasmastrahl, ein Laser- oder Elektronenstrahl oder ähnliches verwendet werden. Das Herstellungsverfahren kann insbesondere ein strahlbasiertes additives Herstellungsverfahren sein. Das Bauteilausgangsmaterial kann z.B. ein Metall, Kunststoff oder Keramik sein oder enthalten. Es kann auch z.B. ein Pulver-Fülldraht oder -Füllband sein.

Mit dem Begriff "Scanstrategie" soll hier in erster Linie die Beschreibung der Verfestigung eines definierten Querschnitts in einer Schicht aus einem Bauteilausgangsmaterial mittels mindestens einer bewegten (insbesondere punktförmigen) Energiequelle unter Berücksichtigung von Ablenkwegen bzw. Belichtungswegen (Scanmuster) und Strahlparametern sowie der Zeitabhängigkeit der Ablenkwege und Richtungsabhängigkeit der Ablenkwege zur Erzeugung gewünschter Bauteil- und Gefügeeigenschaften gemäß der Dissertation von Diplom-Ingenieur Markus Kahnert, "Scanstrategien zur verbesserten Prozessführung beim Elektronenstrahlschmelzen (EBM)", Technische Universität München, 2013, gemeint sein. Daraus ist auch die Definition eines "Scanmusters" (englisch scanning pattern) abgeleitet: Geometrische Beschreibung der Ablenkwege oder Verbindungslinien von aufeinander folgenden Energieeinträgen, wenn zum Beispiel gepulst wird, zur Verfestigung der Bauteilkontur und/oder des Bauteilquerschnitts mittels mindestens eines Strahls. Das Scanmuster kann zusätzlich zum Hatching ein Outlining umfassen. Das "Outlining" ist dabei das konturparallele Abfahren der Außenlinie eines Bauteilquerschnitts mit dem Strahl. Das "Hatching" ist das Muster, nach welchem die anlageneigene Energieführung den Strahl ablenkt, um den Bauteilquerschnitt zu verfestigen. Die Beschreibung des Hatchings beinhaltet darüber hinaus die Unterteilung in Teilbereiche und deren Füllung mit (weiteren) Mustern.

Bei dem additiven Herstellungsverfahren, das auch generatives Herstellungsverfahren bezeichnet wird, kann es sich beispielsweise um Lichtbogen-, Plasma-, Laser- und Elektronenstrahlauftragsschweißen und allgemeiner Auftragsschweißen, insbesondere Pulverauftragsschweißen, Laser- und Elektronenstrahlschmelzen, Lasersintern und alle weiteren Verfahren handeln, bei denen Material in der Schmelze zur Generierung eines Bauteils selektiv aufgetragen wird.

Des Weiteren betrifft die vorliegende Erfindung ein Verfahren zur Ansteuerung einer Vorrichtung zur strahlbasierten additiven Herstellung eines dreidimensionalen Bauteils, insbesondere gemäß einem Herstellungsverfahren nach einem der Ansprüche 1 bis 16. Damit einher geht auch ein Computerprogrammprodukt, das in einem computerlesbaren Speichermedium gespeichert ist, um bei Ausführung in einem Computersystem das Computersystem anzuweisen, das Verfahren auszuführen.

Bei den etablierten additiven Herstellungsverfahren, wie zum Beispiel Laser- oder Elektronenstrahlumschmelzen, werden die Trajektorien, die auch als Belichtungswege oder Ablenkwege bezeichnet werden, einer Wärmequelle, insbesondere die Richtungen, rein nach allgemeingültigen Algorithmen bauteilunspezifisch anhand des Bauteilquerschnitts ausgelegt Das Dokument GB 2 378 150 A offenbart ein Verfahren nach dem Oberbegriff des Anspruchs 1 und ein Verfahren nach dem Oberbegriff des Anspruchs 12.

Aus der DE 100 42 134 C2 ist ein Verfahren zur Herstellung von dreidimensionalen Sinter-Werkstücken bekannt, bei dem der Bauteilquerschnitt in Teilbereiche unterteilt wird und in jedem Teilbereich eine Bestrahlung durch nebeneinander liegende Bestrahlungslinien (zeilen- oder spaltenartige Bestrahlung) erfolgt, wobei die Bestrahlungslinien von benachbarten Teilbereichen um 90° zueinander gedreht sind.

Aus der US 5,155,324 ist darüber hinaus ein Verfahren zum selektiven Lasersintern bekannt, bei dem sich die Bestrahlungslinien von übereinander angeordneten Schichten kreuzen.

Die Teilbereiche können im Stand der Technik zum Beispiel als Streifen oder Segmente ausgebildet sein.

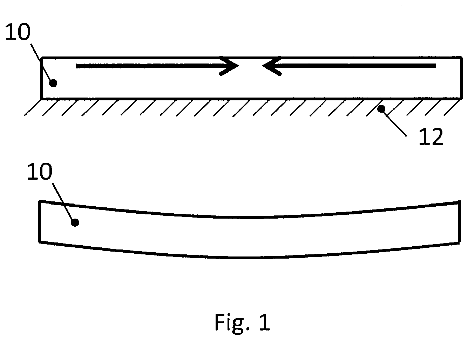

Während des additiven Herstellungsverfahrens entstehen durch den schichtweisen Aufbau und die lokale Energieeinbringung mittels mindestens eines Strahls, wie zum Beispiel eines Laserstrahls oder eines Elektronenstrahls, thermisch induzierte Eigenspannungen, die zu Verzug des Bauteils oder von Bauteilbereichen führen können. Wie in der Figur 1 schematisch gezeigt ist, können am Ende des Herstellungsverfahrens hohe Zugspannungen in der Oberfläche eines gefertigten Bauteils 10 herrschen, die nach der Abtrennung des Bauteils von einer Bauplattform 12 relaxieren und zu einer entsprechenden Verbiegung (Aufspreizung) des Bauteils 10 führen. Figur 1 zeigt links schematisch durch die beiden Pfeile die Zugspannung nach Durchführung eines additiven Herstellungsverfahrens und rechts schematisch die Verbiegung (Verformung) durch Spannungsrelaxation.

Der vorliegenden Erfindung liegt somit die Aufgabe zugrunde, das additive Herstellungsverfahren der eingangs genannten Art derart weiterzubilden, dass eine stärkere Reduzierung von (prozessbedingten) Dehnungen während des Aufbauprozesses erreicht wird.

Erfindungsgemäß wird diese Aufgabe bei dem eingangs genannten additiven Herstellungsverfahren dadurch gelöst, dass die Richtung der Scanvektoren des Hatchings für eine jeweilige Bandteilschicht bauteilgeometriespezifisch gewählt ist. Ein Scanvektor gibt die Richtung der Trajektorie einer Energiequelle, z. B eines Strahls, oder Verbindungslinie von aufeinander folgenden, insbesondere beanstandeten, Energieeinträgen (z. B. gepulst) an Die Erfindung wird durch die Merkmale des Anspruchs 1 definiert.

Des Weiteren liefert die vorliegende Erfindung ein Verfahren zur Ansteuerung einer Vorrichtung zur additiven Herstellung eines dreidimensionalen Bauteils aus mehreren Bauteilschichten, gemäß dem Anspruch 12.

Das Hatching für eine neu aufzubringende Bauteilschicht wird so gewählt, dass die Scanvektoren senkrecht mit einer Abweichung von maximal ± 45 Grad zur nach dem Aufbringen der Schicht in selbiger vorliegenden Hauptspannungsrichtung verlaufen. Vorteilhafterweise beträgt die Abweichung maximal ±25°, bevorzugter maximal ±15° und noch bevorzugter ±5°. Über das Hook'sche Gesetz korrelieren Spannungen und elastische Dehnungen, so dass die Auslegung nach der Hauptrichtung der elastischen Dehnungen zum selben Ergebnis führt, wie nach der Hauptspannungsrichtung bzw. Spannungshauptrichtung und somit auch umfasst sein soll.

Gemäß einer besonderen Ausführungsform der vorliegenden Erfindung wird das Hatching basierend auf einer numerischen Simulation gewählt.

Günstigerweise wird bei der Simulation der Hauptspannungsrichtung ein etwaiger Einfluss eines Scanmusters vernachlässigt. Dies kann zum Beispiel in der Form umgesetzt werden, dass von einer isotropen Dehnung ausgegangen wird, während die Dehnung im Normalfall in der Realität anisotrop ist.

Vorteilhafterweise wird zur Simulation der Hauptspannungsrichtung ein mechanisch statisches Prozessmodell benutzt. Hierbei kann es sich beispielsweise um eine spezielle Berechnungsmethode durch die Nutzung der "Methode der bleibenden Dehnungen/Inherent strain Method" handeln.

Insbesondere kann dabei vorgesehen sein, dass das Prozessmodell durch die Methode der Finiten Elemente (FEM) numerisch gelöst wird.

Zweckmäßigerweise wird ein CAD-Model des Bauteils in ein Netz aus finiten Elementen überführt, wobei das Netz zur Abbildung der Bauteilschichten des Bauteils in Schichten zerlegbar ist.

Günstigerweise wird zur Simulation der Hauptspannungsrichtung die simulierte Dicke der Schichten größer als im realen Prozess gewählt. Dadurch lässt sich Rechenzeit sparen. Durch die Deaktivierung aller Elemente (keine physikalische Interaktion) zu Beginn und die sequentielle Aktivierung der Schichten kann dann der Aufbau repräsentiert werden.

Günstigerweise wird das Hatching in mindestens zwei Teilbereiche unterteilt. Die Teilbereiche können sich z. B. hinsichtlich der Scanvektor-Richtung unterscheiden.

Insbesondere kann dabei vorgesehen sein, dass die Form und/oder Größe der Teilbereiche in Abhängigkeit von der Bauteilgeometrie und/oder -größe und/oder der Spannungsverteilung ausgewählt wird/werden.

Weiterhin kann vorgesehen sein, dass jedes der Hatchings bereits vor dem Beginn des Aufbringens des Bauteilausgangsmaterials gewählt ist. Es kann aber auch vorgesehen sein, dass das jeweilige Hatching erst in Echtzeit berechnet bzw. bestimmt wird.

Ferner kann dass Verfestigen erst nach einem Hinzufügen einer Bauteilschicht aus dem Bauteilausgangsmaterial erfolgen.

Schließlich kann das Verfestigen gleichzeitig mit dem Hinzufügen des Bauteilausgangsmaterials erfolgen.

Der vorliegenden Erfindung liegt die überraschende Erkenntnis zugrunde, dass die in einem Bauteil in einem generativen Herstellungsverfahren entstehenden Eigenspannungen maßgeblich von der Geometrie des Bauteils abhängen und daher das Hatching für eine jeweilige Bauteilschicht bauteilgeometriespezifisch gewählt werden sollte.

Insbesondere wenn gemäß der Erfindung die Scanvektoren bzw. Trajektorien der Energiequellen (Wärmequellen) senkrecht mit einer Abweichung von maximal ± 45 Grad zum Feld der Hauptspannungs- oder Hauptdehnungsrichtung verlaufen, das aus der Erstarrung der jeweiligen Schicht auf zuvor erzeugten folgt, wird eine besonders starke Reduzierung der Dehnungen während des Aufbauprozesses erreicht. Als Grund dafür wird eine Anisotropie in den Dehnungen eines gescannten Bauteilquerschnitts bzw. Teilbereiches desselben angesehen, die dazu führt, dass die wirkenden Dehnungen quer zur Scanrichtung wesentlich geringer als in Scanrichtung sind.

Weitere Merkmale und Vorteile der Erfindung ergeben sich aus den beigefügten Ansprüchen und der nachfolgenden Beschreibung, in der mehrere Ausführungsbeispiele anhand der schematischen Zeichnungen im Einzelnen erläutert werden. Dabei zeigt bzw. zeigen:

| | |
|---|---|
| Figur 1 | schematisch Zugspannungen an der oberen Seite eines Bauteils nach Durchführung eines strahlbasierten additiven Herstellungsverfahrens (links) und die Verformung durch Relaxation der Zugspannungen (rechts); |
| Figuren 2a bis 2d | am Beispiel eines Twin-Cantilever-Bauteils schematisch Dehnungen und Spannungen in Abhängigkeit vom Scan-Muster bzw. Hatching; |

| Figur 3 | schematisch den Endverzug des Twin-Cantilever-Bauteils der Figuren 2a bis 2d nach Abtrennen von einer Bauplattform; |
|---|---|
| Figur 4 | die Aufspreizung $u_z$ (gemessener Endverzug) bei mit den in den Figuren 2a bis 2d gezeigten Scanmustern hergestellten Proben (Proben a bis d); |
| Figur 5 | eine perspektivische Ansicht von einem kreuzförmigen Bauteil mit schematischer Darstellung der Hauptspannungsrichtungen; |
| Figuren 6a bis 6c | schematisch die Spannungen bei dem Bauteil von Figur 5 bei Verwendung von verschiedenen Scanmustern; |
| Figur 7 | beispielhaft den Wechsel der Hauptspannungsrichtung zwischen zwei aufeinanderfolgenden Bauteilschichten bei der Durchführung eines additiven Herstellungsverfahrens; |
| Figur 8 | schematisch die Zuordnung von berechneten Punkten aus einer numerischen Simulation mit Schichten mit größeren Dicken als in einem realen Prozess zu den Bauteilschichten in dem Prozess; |
| Figur 9 | beispielhafte Scanvektoren, die anhand einer numerischen Simulation für ein in der Figur 5 gezeigtes kreuzförmiges Bauteil erhalten worden sind; |
| Figuren 10a bis 10c | Simulationsergebnisse für den Endverzug nach Abtrennung des Bauteils von einer Bauplattform nach Verwendung eines zu der in der Figur 9 gezeigten Hauptspannungsrichtung orthogonalen Scanmusters (a) und im Vergleich dazu bei Verwendung eines Schachbrett-Musters 90°-Rotation über die Segmente gemäß dem Stand der Technik (b) und einer 90°-Rotation der Scanrichtung über aufeinanderfolgende Schichten gemäß dem Stand der Technik (c); und |
| Figur 11 | eine schematische Darstellung der medialen Achse eines Bauteils zur Bestimmung der Hauptspannungsrichtung innerhalb einer Schichtebene (2D). |

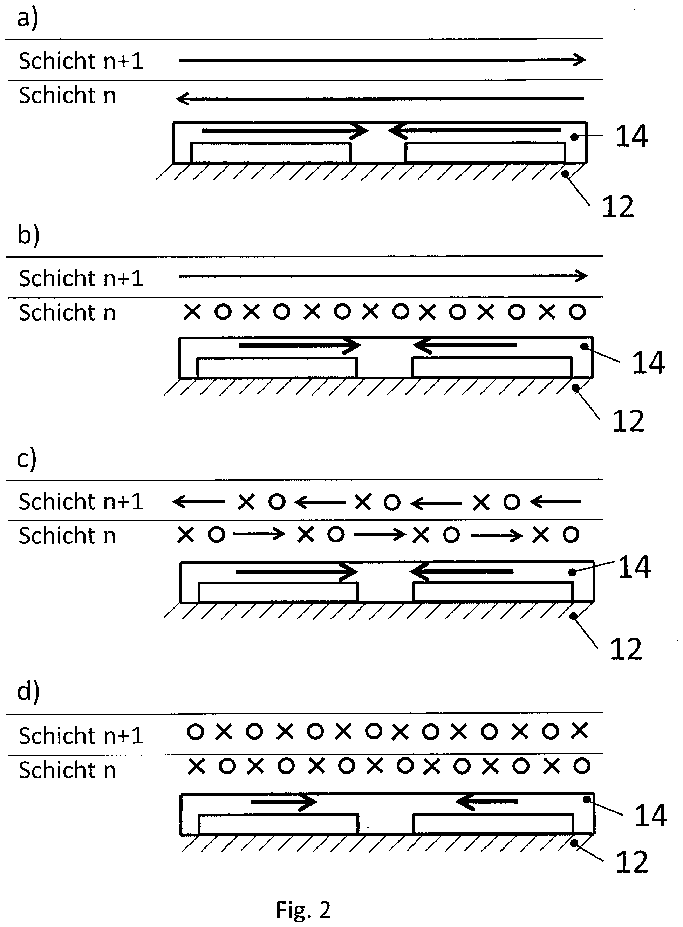

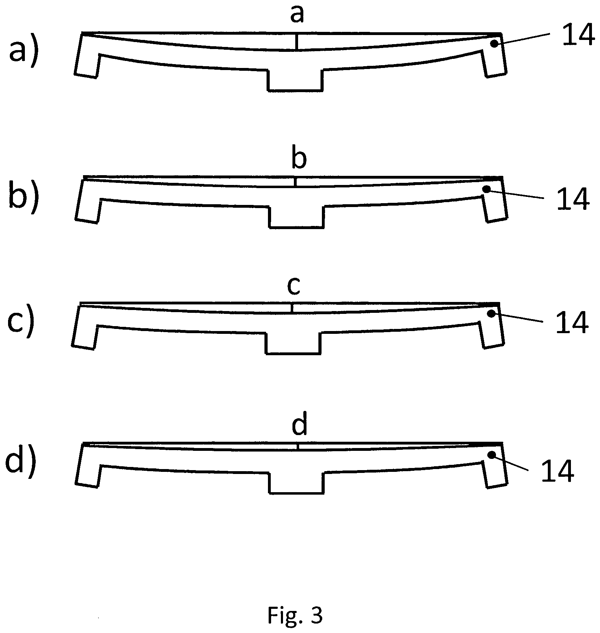

Am Beispiel eines Twin-Cantilever-Bauteils 14 soll demonstriert werden, dass die Geometrie eines Bauteils maßgebend ist, wie hoch und in welche Richtung Spannungen in einem Bauteil bei dessen Herstellung mit einem additiven Herstellungsverfahren entstehen. Das Twin-Cantilever-Bauteil zeichnet sich dadurch aus, dass eine Raumrichtung besonders anfällig für einen Spannungsaufbau ist. Die Figuren 2a bis 2d und 3a bis 3d zeigen die Unterschiede in der Spannung und im Endverzug in Abhängigkeit von der Orientierung des Belichtungswegs schematisch.

Eine in der Figur 2a gezeigte Belichtung (bilinear in Spannungsrichtung) parallel zur spannungsanfälligen Bauteilrichtung, das heißt zur Hauptspannungsrichtung, wie durch die Pfeile für zwei aufeinanderfolgende Bauteilschichten (Schicht n und Schicht n+1) gezeigt, resultiert in hohen Dehnungen und Spannungen, wie durch die Pfeile in dem Twin-Cantilever-Bauteil 14 angedeutet. Eine 90°-Rotation der Belichtungswege (bilinear mit Wechsel von 90° über Segmente bzw. Bauteilschichten) über Segmente und Bauteilschichten führt zu einer Mittelung der Dehnungen quer und längs zur Belichtungsrichtung (siehe Figuren 2b und 2c). Durch eine Belichtung (bilinear quer zur Hauptspannungsrichtung) quer zur anfälligen Richtung, das heißt zur Hauptspannungsrichtung, sind die Spannungen über den langen oberen Steg des Twin-Cantilever-Bauteils sehr gering, sodass hier eine minimale Spannung entsteht (siehe Figur 2d).

Die Figuren 3a bis 3d zeigen schematisch den Endverzug zu den jeweiligen Figuren 2 bis 2d, der sich durch das Abtrennen des Twin-Cantilever-Bauteils von einer Bauplattform 14 ergibt und mit der vorherigen Eigenspannung korrigiert. Hier gilt für die eingezeichnete Durchbiegung a, b, c und d in der Mitte: a>b ~ c>d.

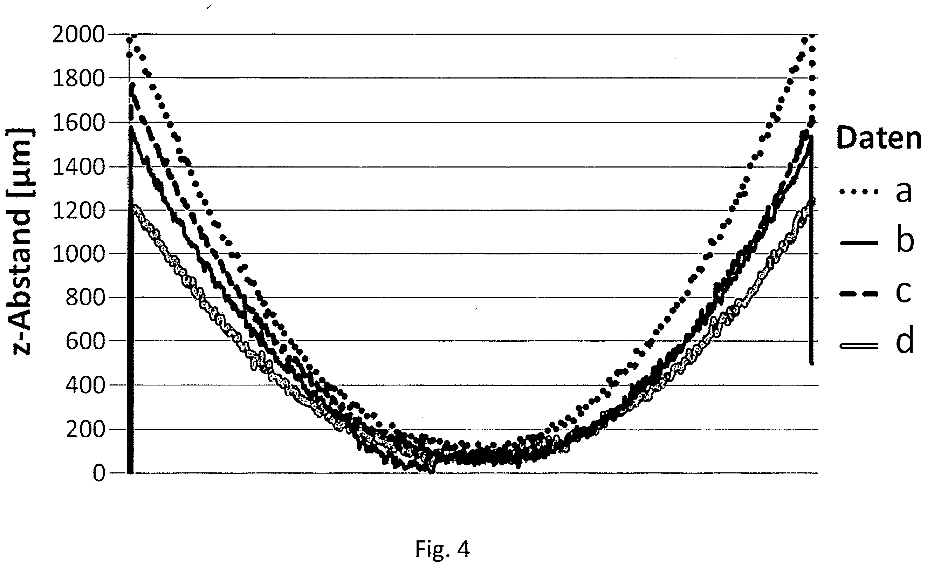

Figur 4 zeigt Messergebnisse zur experimentellen Validierung der Annahmen für Proben a bis d von einem Twin-Cantilever-Bauteil, bei deren additiver Herstellung die in den Figuren 2a bis 2d gezeigten Belichtungswege verwendet worden sind. Maximale Aufspreizungen wurden an den äußersten Enden des Twin-Cantilever-Bauteils festgestellt. Die maximale Aufspreizung (Endverzug) war bei der Probe a am größten und bei der Probe b am geringsten.

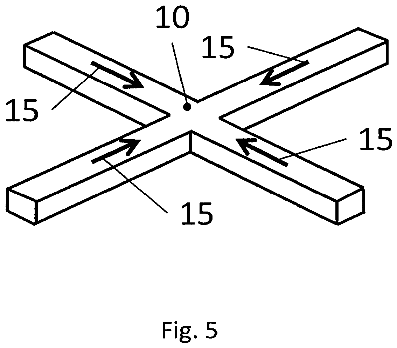

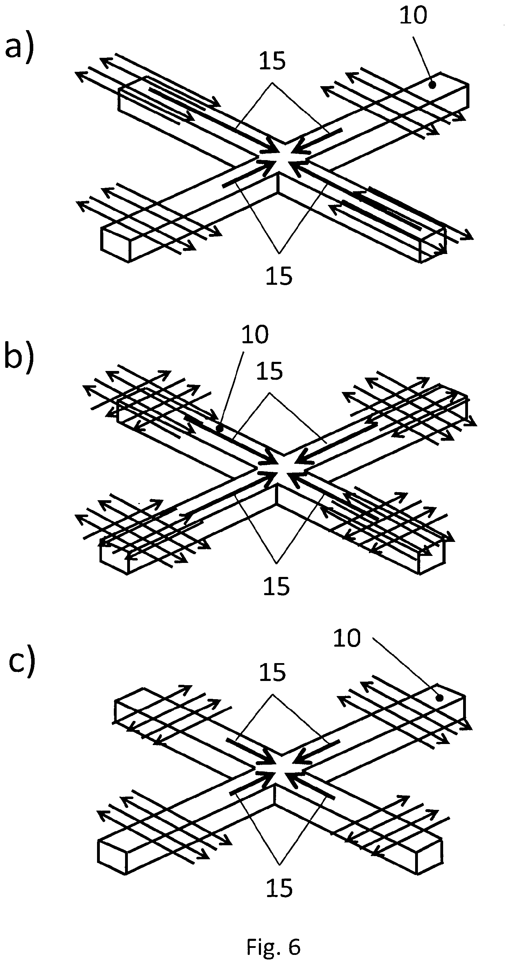

Figur 5 zeigt ein weiteres Bespiel für ein denkbares Bauteil. Es handelt sich um ein kreuzförmiges Bauteil 10, das zwei spannungsanfällige Richtungen besitzt. In diesem Fall ist die Hauptspannungsrichtung 15 auch innerhalb einer Bauteilschicht ortsabhängig, wie durch die Pfeile angedeutet werden soll. Dabei ergeben sich entsprechend dem Winkel zwischen der Orientierung des Belichtungswegs und der Hauptspannungsrichtung entsprechend unterschiedlich hohe Zugspannungen in den vier Armen des kreuzförmigen Bauteils 10. Figuren 6a bis 6c zeigen schematisch die Höhe der entstehenden Spannungen in Abhängigkeit von der verwendeten Scanstrategie bzw. dem verwendeten Scanmuster. Bei für alle vier Arme gleich orientierten Belichtungswegen, wie durch Pfeile in den äußeren Bereichen der vier Arme angedeutet (siehe Figur 6a), entstehen entlang der einen Achse maximale und entlang der dazu orthogonalen Achse minimale Spannungen, wie durch die Pfeile (Hauptspannungsrichtungen 15) in der Mitte des kreuzförmigen Bauteils angedeutet (siehe Figur 6a). Durch eine Vermischung von unterschiedlichen Orientierungen der Belichtungswege ergibt sich eine mittlere Spannung, die in allen vier Armen gleich hoch ist (siehe Figur 6b). Bei einer Auslegung der Belichtungswege orthogonal zur jeweiligen Hauptspannungsrichtung 15 ergibt sich eine minimale Spannung in allen vier Armen (siehe Figur 6c). Dabei sind die maximalen Spannungen in dem in der Figur 6a gezeigten Fall höher als in dem in der Figur 6b gezeigten Fall und diese wiederum höher als die in dem in der Figur 6c gezeigten Fall.

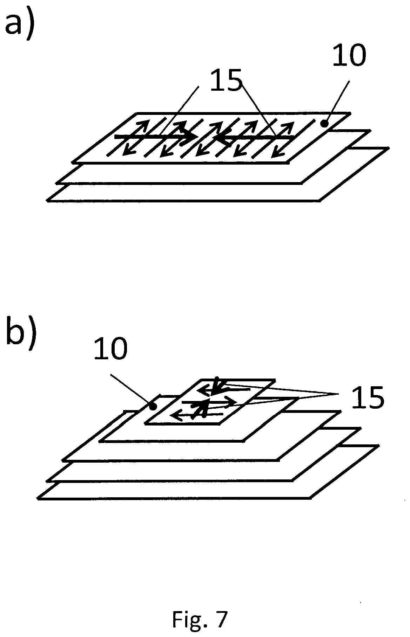

Mittels der Figur 7 soll kurz auf einen Wechsel der Hauptspannungsrichtung zwischen zwei Bauteilschichten eines Bauteils 10 während einer Herstellung mittels eines additiven Herstellungsverfahrens eingegangen werden. Hierbei ist ein direkter Wechsel der Hauptspannungsrichtung 15, die in der Figur 7a durch sich von links nach rechts bzw. von rechts nach links erstreckende Pfeile und in der Figur 7b durch sich von vorne nach hinten bzw. von hinten nach vorne erstreckende Pfeile angedeutet ist, mit der Änderung des Länge-Breite-Verhältnisses des Bauteilquerschnitts zu beobachten. Die Figuren 7a und 7b zeigen sowohl den Wechsel der Hauptspannungsrichtung durch eine Querschnittsänderung als auch die zugehörige orthogonale Ausrichtung der Belichtungswege.

Ganz allgemein können durch die Auslegung der Scanvektoren anhand von Simulationsergebnissen ein verringerter Endverzug sowie geringere Spannungen und plastische Dehnungen erreicht werden. Um hohe Dehnungen in bauteilgeometriebedingte sensitive Verzugsrichtung(Endverzug) und Rissbildung zu minimieren, ist es besonders vorteilhaft, den Hatch für eine neu aufzubringende Bauteilschicht 10 zu wählen, so dass die Scanvektoren senkrecht zur nach dem Aufbringen der Bauteilschicht in selbiger vorliegenden Hauptspannungsrichtungen verlaufen, da die Dehnungen quer zur Scanrichtung wesentlich geringer sind. Um dies technisch zu realisieren, kann zum Beispiel zuvor eine Unterteilung in Teilbereiche bzw. Segmente vorgenommen werden. Dabei ist in einer Ausführungsform jedem Segment eine einzige Scanvektor-Ausrichtung zugeteilt, die sich aus dem Spannungsfeld innerhalb eines Segments ergibt. Die Segmentgrößen können dabei in einem Bereich von zum Beispiel einem Millimeter bis zehn Millimeter liegen. Die Segmentgröße kann im Allgemeinen frei gewählt werden und kann der Auflösung entsprechen, mit der die Belichtung an die Spannungsrichtung angepasst wird. Vorteilhafterweise wird die Segmentgröße passend zur Bauteilgeometrie und/oder -größe ausgewählt. Wenn die Bauteilgeometrie beispielsweise sehr komplex ist, ändert sich die Hauptspannungsrichtung häufig und sollten dann eher kleine Segmente verwendet werden.

Gemäß einer besonderen Ausführungsform der vorliegenden Erfindung wird zur Berechnung der Hauptspannungsrichtung dann ein mechanisch statisches Prozessmodell benutzt, welches durch die Methode der finiten Elemente (FEM) numerisch gelöst wird. Hierbei wird zuerst das Bauteil (CAD) in ein Rechennetz aus finiten Elementen überführt. Um den schichtweisen Aufbau des Bauteils abbilden zu können, sollte das Rechennetz vorteilhafterweise so konstruiert werden, dass es in Schichten zerlegbar ist. Um Rechenzeiten einzusparen, sind die Schichtdicken in der numerischen Simulation meist wesentlich größer als die in einem realen Prozess verwendeten. Durch eine Deaktivierung aller Elemente (keine physikalische Interaktion) zu Beginn und eine schichtweise Aktivierung der Schichten, d.h. beispielsweise die Hinzunahme einer neuen Schicht zum Rechenmodell, kann dann der Aufbau des Bauteils repräsentiert werden. Gemäß einer besonderen Ausführungsform der vorliegenden Erfindung wird nach einer Aktivierung einer Schicht dann dieser Schicht jeweils eine negative Volumendehnung als Randbedingung hinzugefügt, die der Belastung durch thermische Kontraktion bei Abkühlung entsprechen soll. Diese ist im Normalfall anisotrop. Für die Ermittlung der Hauptspannungsrichtung soll hier gemäß der vorliegenden Erfindung eine isotrope Dehnung verwendet werden (Dehnung in alle Raumrichtungen gleich), um keinen Einfluss der - zu dem Zeitpunkt auch noch nicht definierten - Belichtungswege zu haben.

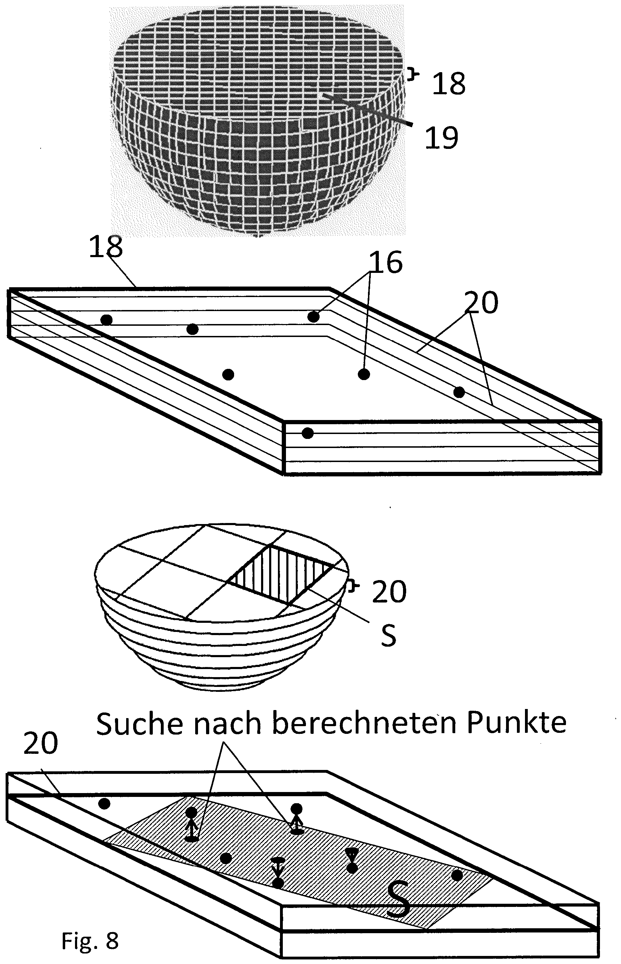

Gemäß der vorliegenden Erfindung wird dann jeweils die Situation beobachtet, die sich nach der Wirkung isotroper negativer Volumendehnungen auf eine Schicht innerhalb dieser Schicht ergibt. Beobachtet wird dann jeweils die Situation, die sich nach der Wirkung isotroper negativer Volumendehnungen auf eine Schicht innerhalb dieser Schicht ergibt. Figur 8 zeigt die Zuordnung von berechneten Punkten 16 aus einer Simulation mit Schichten 18 mit einer größeren Dicke als diejenige von Bauteilschichten 20 in einem realen Prozess. Die Superposition der Spannungstensoren für Ns in einem Segment S liegende Rechenpunkte mit einem maximalen z-Abstand einer simulierten Schichtdicke soll dann die Richtung der Scanvektoren bestimmen.

$$\Sigma^S = \sum_{i=0}^{N^S} \sigma^i$$

Die Eigenwerte $(\lambda_1^\Sigma, \lambda_2^\Sigma, \lambda_3^\Sigma)$ des Spannungstensors $\Sigma$ ergeben sich aus der Lösung des Eigenwertproblems des Spannungstensors.

$$\Sigma^S \vec{x} = \lambda^\Sigma \vec{x}$$

Die Hauptspannungsrichtung $\vec{\varsigma}$ entspricht dann dem Eigenvektor zum höchsten Eigenwert $\lambda^\Sigma_{\max}$

$$(\Sigma^S - \lambda^\Sigma_{\max} I) \cdot \vec{\varsigma}^S = 0$$

mit I als Einheitsmatrix. Für die Orientierung der Scanvektoren im Segment S wird dann der Winkel orthogonal dazu innerhalb der (x, y)-Ebene ausgewertet.

$$\phi^S = \arctan2(-\varsigma_1^S, \varsigma_2^S) \bmod \pi$$

So können dann alle zu belichtenden Segmente Si mit alternierenden Vektoren in die jeweilige Richtung $\phi^{St}$ gefüllt werden. Die Belichtungsreihenfolge sowie eine Aufteilung der Belichtungswege in Segmente können dabei weiterhin beliebig gewählt werden.

Um die Dehnungen und Spannungen eines Bauteils nach einem additiven Herstellverfahren vorhersagen zu können und daraus eine optimale Scanstrategie abzuleiten (siehe oben), wird gemäß einer besonderen Ausführungsform der vorliegenden Erfindung zuvor eine Berechnung durchgeführt, der keine konkreten Belichtungswege zugrunde liegen. Der eigentlich anisotrope Dehnungszustand innerhalb eines Segments (höhere Dehnung in Scanrichtung) wird dafür durch einen Isotropen ersetzt, in dem die Höhe der Dehnung in alle drei Raumrichtungen gleich ist. Durch die Nutzung dieser Dehnung wird der Einfluss der Belichtungswege vernachlässigt, sodass die Höhe und Richtung der Spannungen allein aus der Bauteilgeometrie folgt.

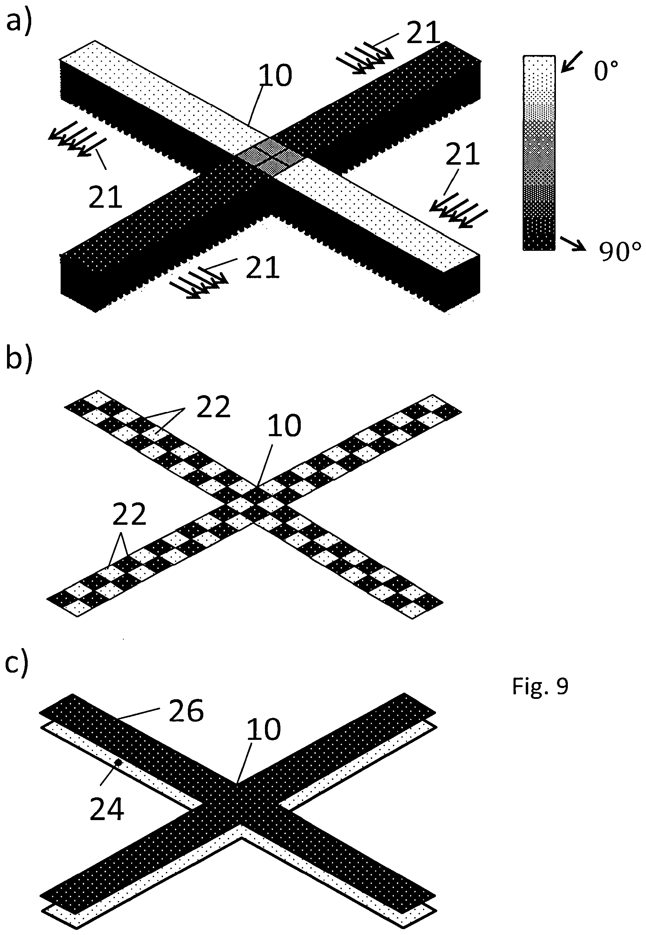

Figuren 9a bis 9c zeigen für ein kreuzförmiges Bauteil, wie zum Beispiel das in Figur 5 schematisch dargestellte Bauteil 10, das zwei verzugssensitive Richtungen aufweist, unterschiedliche Scanmuster. Das in der Figur 9a gezeigte Scanmuster hat sich dadurch ergeben, dass für alle Schichten eine Segmentierung (zum Beispiel 5mm × 5mm) berechnet wurde. So konnte nach dem oben beschriebenen Algorithmus ein Winkel in der (x, y)-Ebene für jedes Segment gefunden werden, welcher senkrecht zur Hauptspannungsrichtung (in Projektion auf die Schicht) ist. Wie durch die Pfeile angedeutet wird, verlaufen die Scanvektoren 21 der sich beiden kreuzenden Achsen über einen Großteil jeweils im rechten Winkel dazu. Lediglich für äußere Randbereiche sowie um den Mittelpunkt herum ergeben sich Übergangsbereiche für die Orientierung der Scanvektoren. Dem gegenübergestellt sind Scanstrategien bzw. Scanmuster im Stand der Technik (siehe Figuren 9b und 9c). Typische Segmentgrößen liegen dabei im Bereich zwischen circa 2mm und circa 5mm. In der Figur 9b besteht das Scanmuster aus einem Schachbrett-Muster mit 90°-Rotation über die Segmente, von denen nur einige mit der Bezugszahl 22 gekennzeichnet sind. In der Figur 9c liegt eine 90°-Rotation der Scanvektoren über aufeinanderfolgende Bauteilschichten 24 und 26 vor. Oft werden auch andere Winkel als 90°-Winkel gewählt.

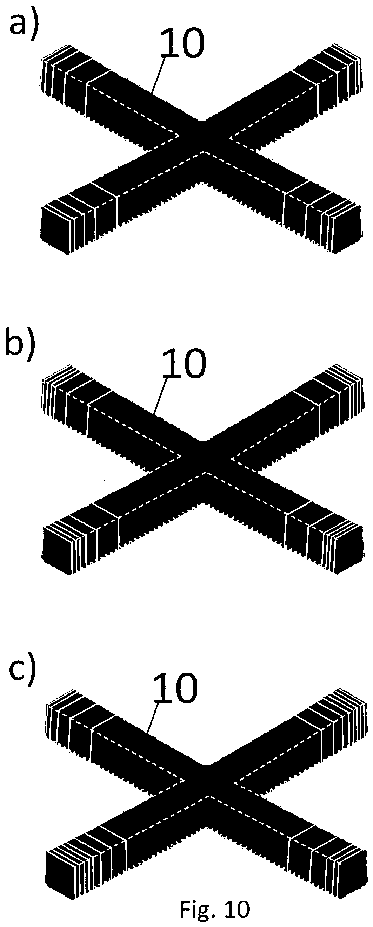

Nach Abtrennen des Bauteils 10 von der Bauplattform 12 (siehe zum Beispiel Figur 1) und der Spannungsrelaxation sind im Bauteil höhere Resteigenspannungen vorhanden. Grund dafür ist, dass die Spannungen quer zur Verzugsrichtung gerichtet sind und aufgrund der hohen Steifigkeit des Bauteils die quergerichteten Spannungen beim Abschneiden nicht relaxieren können. Die Höhe der maximalen Dehnung bzw. Spannung ist durch die beispielsweise in der Figur 9a gezeigte Scanstrategie bzw. das daran gezeigte Scanmuster geringer als bei den im Stand der Technik bekannten Verfahren, da eine Akkumulation der Dehnungen über die wesentlich kleinere Länge (hier obere Stegbreite) zu geringeren Werten führt (siehe stationäre Kontinuumsmechanik). Unter der Annahme eines elasto-plastischen Materialmodels wird durch die Auslegung quer zur Hauptspannungsrichtung eine Reduzierung von plastischen Dehnungen erreicht. Letztere können als eine Materialschädigung verstanden werden, die während es Bauprozesses aufgrund der Belastung durch weitere Schichten zu Rissbildung und Abrissen führen können, die oft einen Abbruch des Herstellungsverfahrens bedeuten. Die Annahme der Spannungsminimierenden Belichtung konnte sowohl simulativ als auch experimentell bestätigt werden. Die Figuren 10a bis 10c liefern einen Vergleich von Simulationsergebnissen (Endverzug nach Abtrennung von der Bauplattform) für die in beispielsweise der Figur 9a gezeigte Belichtung und den zwei in den Figuren 9b und 9c gezeigten üblichen Belichtungen. Die Asymmetrie kommt durch die letzte Schicht zustande, die in diesem Fall in x-Richtung belichtet wird. Der Einfluss in einem realen Prozess ist etwas geringer, da die Schichten im realen Prozess nur circa 1/10 dick wie in der Simulation sind. Es ist deutlich zu erkennen, dass bei einer zur Hauptspannungsrichtung orthogonalen Scanrichtung der Endverzug bzw. die Biegung deutlich geringer als in den Figuren 10b und 10c ist (siehe Figur 10a). Dies wurde auch mit Hilfe eines Mikroskops experimentell bestätigt.

Bezugszeichenliste

| | |
|---|---|
| 10 | Bauteil |
| 12 | Bauplattform |
| 14 | Twin-Cantilever-Bauteil |
| 15 | Hauptspannungsrichtung |
| 16 | berechnete Punkte |
| 18 | Schicht |
| 19 | Rechenzelle |
| 20 | Bauteilschichten |
| 21 | Scanvektor |
| 22 | Segmente |
| 24 | Bauteilschicht |
| 26 | Bauteilschicht |
| 28 | mediale Achse |
| a, b, c, d | Durchbiegung |
| S | Segment |

**Patentansprüche**

1. Additives Herstellungsverfahren zum Herstellen eines dreidimensionalen Bauteils (10; 14) aus mehreren Bauteilschichten durch mehrfaches inkrementelles, insbesondere schichtweises, Hinzufügen von pulver-, draht- oder bandförmigem Bauteilausgangsmaterial und, insbesondere inkrementelles, formgebendes Verfestigen durch jeweiliges selektives Schmelzen und/oder Sintern des Bauteilausgangsmaterials mittels einer gemäß einer Scanstrategie durch mindestens eine Energiequelle eingebrachten Wärmemenge, wobei die Scanstrategie ein Scanmuster umfasst, das ein Hatching umfasst, wobei die Richtung der Scanvektoren (21) des Hatchings für eine jeweilige Bauteilschicht bauteilgeometriespezifisch gewählt ist, **dadurch gekennzeichnet, dass** das Hatching für eine neu aufzubringende Bauteilschicht so gewählt wird, dass die Scanvektoren (21) senkrecht mit einer Abweichung von maximal $\pm 45°$ zur nach dem Aufbringen der Bauteilschicht in selbiger vorliegenden Hauptspannungsrichtung verlaufen, wobei die Hauptspannungsrichtung basierend auf einer numerischen Simulation gewählt wird, wobei für die Ermittlung der Hauptspannungsrichtung eine isotrope Dehnung verwendet wird, um keinen Einfluss des zu dem Zeitpunkt noch nicht definierten Hatchings zu haben, wobei die Situation beobachtet wird, die sich nach der Wirkung isotroper negativer Volumendehnungen auf eine Schicht innerhalb dieser Schicht ergibt.

2. Verfahren nach Anspruch 1, wobei bei der numerischen Simulation der Hauptspannungsrichtung (15) ein etwaiger Einfluss eines Scanmusters vernachlässigt wird.

3. Verfahren nach Anspruch 1 oder 24, wobei zur Simulation der Hauptspannungsrichtung ein mechanisch statisches Prozessmodell benutzt wird.

4. Verfahren nach Anspruch 3, wobei das Prozessmodell durch die Methode der Finiten Elemente (FEM) numerisch gelöst wird.

5. Verfahren nach Anspruch 46, wobei ein CAD-Modell des Bauteils (10; 14) in ein Netz aus finiten Elementen überführt wird, wobei das Netz zur Abbildung der Bauteilschichten des Bauteils (10; 14) in Schichten zerlegbar ist.

6. Verfahren nach Anspruch 5, wobei zur Simulation der Hauptspannungsrichtung (15) die simulierte Dicke der Schichten (18) größer als im realen Prozess gewählt wird.

7. Verfahren nach einem der vorangehenden Ansprüche, wobei das Hatching in mindestens zwei Teilbereiche unterteilt wird.

8. Verfahren nach Anspruch 7, wobei die Form und/oder Größe der Teilbereiche in Abhängigkeit von der Bauteilgeometrie und/oder -größe und/oder der Spannungsverteilung im Bauteil ausgewählt wird/werden.

9. Verfahren nach einem der vorangehenden Ansprüche, wobei jeder des Hatchings bereits vor dem Beginn des Aufbringens des Bauteilausgangsmaterials gewählt ist.

10. Verfahren nach einem der vorangehenden Ansprüche, **dadurch gekennzeichnet, dass** das Verfestigen erst nach einem Hinzufügen einer Bauteilschicht aus dem Bauteilausgangsmaterial erfolgt.

11. Verfahren nach einem der Ansprüche 1 bis 9, **dadurch gekennzeichnet, dass** das Verfestigen gleichzeitig mit dem Hinzufügen des Bauteilausgangsmaterials erfolgt.

12. Verfahren zur Ansteuerung einer Vorrichtung zur additiven Herstellung eines dreidimensionalen Bauteils (10; 14) aus mehreren Bauteilschichten, insbesondere gemäß einem Herstellungsverfahren nach einem der vorangehenden Ansprüche, wobei das Verfahren die folgenden Schritte umfasst:

- Ausrichten mindestens einer Energiequelle, insbesondere eines Strahls, insbesondere eines Laser- oder Elektronenstrahls, auf Pulverpartikeln auf einer zu beschichtenden Oberfläche oder eine Schicht aus einem pulver-, draht- oder bandförmigen Bauteilausgangsmaterial und
- Ablenken der mindestens einen Energiequelle über der Oberfläche oder der Schicht aus einem Bauteilausgangsmaterial entsprechend einer Scanstrategie, die ein Scanmuster umfasst, das einen Hatching umfasst, wobei die Richtung der Scanvektoren (21) des Hatchings für eine jeweilige Bauteilschicht bauteilgeometriespezifisch gewählt ist, **dadurch gekennzeichnet, dass** die mindestens eine Energiequelle so über der Oberfläche oder Schicht aus dem Bauteilausgangsmaterial abgelenkt wird, dass die Scanvektoren senkrecht mit einer Abweichung von maximal $\pm$ 45° zur nach dem Aufbringen der Bauteilschicht in selbiger vorliegenden Hauptspannungsrichtung verlaufen, wobei das Hatching für eine neu aufzubringende Bauteilschicht so gewählt wird, dass die Scanvektoren (21) senkrecht mit einer Abweichung von maximal $\pm$ 45° zur nach dem Aufbringen der Bauteilschicht in selbiger vorliegenden Hauptspannungsrichtung verlaufen, wobei die Hauptspannungsrichtung basierend auf einer numerischen Simulation gewählt wird, wobei für die Ermittlung der Hauptspannungsrichtung eine isotrope Dehnung verwendet wird, um keinen Einfluss des zu dem Zeitpunkt noch nicht definierten Hatchings zu haben, wobei die Situation beobachtet wird, die sich nach der Wirkung isotroper negativer Volumendehnungen auf eine Schicht innerhalb dieser Schicht ergibt.

## Claims

1. Additive manufacturing method for producing a three-dimensional component (10; 14) from a plurality of component layers by way of multiple incremental addition, in particular layer-by-layer addition, of powdery, wire-shaped or tape-shaped component initial material and shaping solidification, in particular incremental solidification, by respective selective melting and/or sintering of the component initial material by means of an amount of heat introduced from at least one energy source in accordance with a scanning strategy, wherein the scanning strategy comprises a scanning pattern comprising hatching, wherein the direction of the scanning vectors (21) of the hatching is chosen in a component geometry-specific fashion for a respective component layer, **characterized in that** the hatching for a component layer to be newly applied is chosen in such a way that the scanning vectors (21), with a deviation of no more than $\pm$45°, extend perpendicular to the principal stress direction present in the component layer after application of the same, wherein the principal stress direction is chosen on the basis of the numerical simulation, wherein isotropic strain is used for ascertaining the principal stress direction so as to have no influence of the hatching not yet defined at this time, wherein the situation arising within a layer following the effect of an isotropic negative volume strain on this layer is observed.

2. Method according to Claim 1, wherein a possible influence of the scanning pattern is neglected during the numerical simulation of the principal stress direction (15).

3. Method according to Claim 1 or 2, wherein a mechanically static process model is used to simulate the principal stress direction.

4. Method according to Claim 3, wherein the process model is solved numerically using the finite element method (FEM).

5. Method according to Claim 4, wherein a CAD model of the component (10, 14) is converted into a grid of finite elements, wherein the grid is decomposable into layers for the purposes of mapping the component layers of the component (10; 14).

6. Method according to Claim 5, wherein the simulated thickness of the layers (18) is chosen to be greater than in the real process for the purposes of simulating the principal stress direction (15).

7. Method according to any one of the preceding claims, wherein the hatching is subdivided into at least two portions.

8. Method according to Claim 7, wherein the shape and/or size of the portions is/are selected on the basis of the component geometry and/or component size and/or the stress distribution in the component.

9. Method according to any one of the preceding claims, wherein each hatching is already chosen before the start of the application of the component initial material.

10. Method according to any one of the preceding claims, **characterized in that** the solidification is only implemented after the addition of a component layer from the component initial material.

11. Method according to any one of Claims 1 to 9, **characterized in that** the solidification is implemented at the same time as the addition of the component initial material.

12. Method for controlling an apparatus for additive manufacturing of a three-dimensional component (10; 14) from a plurality of component layers, in particular according to a production method according to any one of the preceding claims, wherein the method comprises the following steps:

- aligning at least one energy source, in particular a beam, in particular a laser or electron beam, with powder particles on a surface to be coated or a layer made of a powdery, wire-shaped or tape-shaped component initial material and
- deflecting the at least one energy source over the surface or the layer made of a component initial material in accordance with a scanning strategy, which comprises a scanning pattern comprising the hatching, when the direction of the scanning vectors (21) of the hatching is chosen in a component geometry-specific fashion for a respective component layer,

**characterized in that**
the at least one energy source is deflected over the surface or layer made of the component initial material in such a way that the scanning vectors, with a deviation of no more than $\pm 45°$, extend perpendicular to the principal stress direction present in the component layer after application of the same, wherein the hatching for a component layer to be newly applied is chosen in such a way that the scanning vectors (21), with a deviation of no more than $\pm 45°$, extend perpendicular to the principal stress direction present in the component layer after application of the same, wherein the principal stress direction is chosen on the basis of the numerical simulation, wherein isotropic strain is used for ascertaining the principal stress direction so as to have no influence of the hatching not yet defined at this time, wherein the situation arising within a layer following the effect of an isotropic negative volume strain on this layer is observed.

**Revendications**

1. Procédé de fabrication additive permettant de fabriquer une pièce tridimensionnelle (10 ; 14) à partir de plusieurs couches de la pièce par ajout incrémental répété, en particulier par couches, d'une matière première de la pièce en forme de poudre, de fil métallique ou de bande, et par solidification de mise en forme, en particulier incrémentale, par une fusion et/ou un frittage sélectifs respectifs de la matière première de la pièce au moyen d'une quantité de chaleur introduite par au moins une source d'énergie selon une stratégie de balayage, la stratégie de balayage comprenant un motif de balayage qui comprend un hachurage,
dans lequel la direction des vecteurs de balayage (21) du hachurage est sélectionnée de manière spécifique à la géométrie de la pièce pour une couche respective de la pièce,
**caractérisé en ce que** le hachurage pour une couche de la pièce à appliquer nouvellement est choisi de telle sorte que les vecteurs de balayage (21) s'étendent verticalement avec un écart maximal de $\pm 45°$ par rapport à la direction principale de contrainte présente dans celle-ci après l'application de la couche de la pièce, la direction principale de contrainte étant choisie sur la base d'une simulation numérique, une rotation isotrope étant utilisée pour établir la direction principale de contrainte afin de ne subir aucune influence du hachurage pas encore défini à cet instant, dans lequel on observe la situation qui résulte à l'intérieur d'une couche après l'effet de rotations en volume négatifs isotropes sur cette couche.

**2.** Procédé selon la revendication 1, dans lequel lors de la simulation numérique de la direction principale de contrainte (15), une influence éventuelle d'un motif de balayage est négligée.

**3.** Procédé selon la revendication 1 ou 2, dans lequel, pour la simulation de la direction principale de contrainte, un modèle de processus mécaniquement statique est utilisé.

**4.** Procédé selon la revendication 3, dans lequel le modèle de processus est résolu sous forme numérique par la méthode des éléments finis (FEM).

**5.** Procédé selon la revendication 4, dans lequel un modèle de CAO de la pièce (10 ; 14) est transféré dans un maillage d'éléments finis, le maillage pouvant être décomposé en couches pour représenter les couches de pièce de la pièce (10 ; 14).

**6.** Procédé selon la revendication 5, dans lequel, pour la simulation de la direction principale de contrainte (15), l'épaisseur simulée des couches (18) est choisie pour être supérieure à celle du processus réel.

**7.** Procédé selon l'une quelconque des revendications précédentes, dans lequel le hachurage est divisé en au moins deux zones partielles.

**8.** Procédé selon la revendication 7, dans lequel la forme et/ou la taille des zones partielles sont sélectionnées en fonction de la géométrie et/ou de la taille de la pièce et/ou en fonction de la répartition de contrainte dans la pièce.

**9.** Procédé selon l'une quelconque des revendications précédentes, dans lequel chacun des hachurages est choisi avant même le début de l'application de la matière première de la pièce.

**10.** Procédé selon l'une quelconque des revendications précédentes, **caractérisé en ce que** la solidification n'a lieu qu'après un ajout d'une couche de la pièce en matière première de la pièce.

**11.** Procédé selon l'une quelconque des revendications 1 à 9, **caractérisé en ce que** la solidification est effectuée en même temps que l'ajout de la matière première de la pièce.

**12.** Procédé de pilotage d'un dispositif de fabrication additive d'une pièce tridimensionnelle (10 ; 14) à partir de plusieurs couches de la pièce, en particulier selon un procédé de fabrication selon l'une quelconque des revendications précédentes, le procédé comprenant les étapes suivantes consistant à :

- aligner au moins une source d'énergie, en particulier un faisceau, en particulier un faisceau laser ou d'électrons, sur des particules de poudre sur une surface à revêtir ou une couche d'une matière première de la pièce en forme de poudre, de fil métallique ou de bande, et
- dévier ladite au moins une source d'énergie sur la surface ou la couche de matière première de la pièce selon une stratégie de balayage qui comprend un motif de balayage qui comprend un hachurage, dans lequel la direction des vecteurs de balayage (21) du hachurage est sélectionnée de manière spécifique à la géométrie de la pièce pour une couche respective de la pièce,

**caractérisé en ce que** ladite au moins une source d'énergie est déviée sur la surface ou la couche de la matière première de la pièce de telle manière que les vecteurs de balayage s'étendent verticalement avec un écart maximal de ±45° par rapport à la direction principale de contrainte présente dans celle-ci après l'application de la couche de la pièce, le hachurage pour une couche de la pièce à appliquer nouvellement étant choisi de telle sorte que les vecteurs de balayage (21) s'étendent verticalement avec un écart maximal de ±45° par rapport à la direction principale de contrainte présente dans celle-ci après l'application de la couche de la pièce, la direction principale de contrainte étant choisie sur la base d'une simulation numérique, une rotation isotrope étant utilisée pour établir la direction principale de contrainte afin de ne subir aucune influence du hachurage pas encore défini à cet instant, dans lequel on observe la situation qui résulte à l'intérieur d'une couche après l'effet de rotations en volume négatifs isotropes sur cette couche.

Fig. 1

Fig. 2

a)
a
14

b)
b
14

c)
c
14

d)
d
14

Fig. 3

Fig. 4

Fig. 5

Fig. 6

a)

b)

Fig. 7

Suche nach berechneten Punkte

Fig. 8

a)

10

21

21

21

21

0°

90°

b)

22

10

22

c)

26

10

24

Fig. 9

a)

10

b)

10

c)

10

Fig. 10

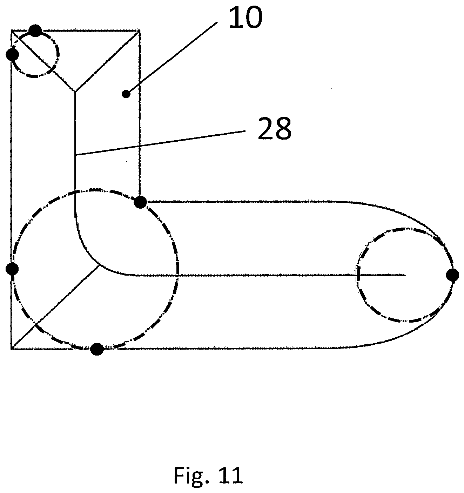

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2378150 A
- DE 10042134 C2

- US 5155324 A

**In der Beschreibung aufgeführte Nicht-Patentliteratur**

- **DIPLOM-INGENIEUR MARKUS KAHNERT.** Scanstrategien zur verbesserten Prozessführung beim Elektronenstrahlschmelzen (EBM). Technische Universität München, 2013